# EUROPEAN PATENT SPECIFICATION

(11) **EP 4 023 529 B1**
(45) Date of publication and mention of the grant of the patent: **01.10.2025**
(21) Application number: 21215429.8
(22) Date of filing: 17.12.2021
(51) Int. Cl.: B62D 5/00

(54) **STEERING SYSTEM**
LENKSYSTEM
SYSTÈME DE DIRECTION

(30) Priority: 31.12.2020 IT 202000032921
(43) Date of publication of application: 06.07.2022
(73) Proprietor: OGNIBENE POWER S.P.A., 42124 Reggio Emilia (IT)
(72) Inventor: OGNIBENE, Claudio, 42121 REGGIO EMILIA (IT)
(74) Representative: Corradini, Corrado

(56) References cited:
- EP-A1- 2 840 012
- DE-A1- 102019 111 266
- DE-A1- 102019 119 463
- JP-A- 2008 285 033
- JP-A- 2020 090 219
- US-A1- 2005 082 107
- US-A1- 2006 201 733

## Description

### TECHNICAL FIELD

The present invention relates to a steering system for heavy vehicles such as agricultural vehicles, in particular for heavy vehicles adapted to move at low speed (typically below 60 km/h).

### PRIOR ART

In heavy vehicle steering systems, such as those for agricultural vehicles, it is important that the user of the vehicle on which the steering system is installed receives a feedback in response to the operation of the steering member in order to improve steering precision and therefore safety as well. In such systems it is also important, for safety reasons, that the steering member, such as a wheel, is not free to move on its own when it is not operated by the vehicle operator.

These expedients are particularly relevant both when the steering system is of the hydrostatic type, i.e. the steering system is provided with a distributor, for example a rotary or linear distributor, configured to selectively send a pressurised working fluid to one or more actuators connected to at least a pair of steering wheels of the vehicle in order to steer the vehicle, or when the steering system is of the steer-by-wire type, regardless of whether the steering wheels are then driven by a hydraulic or electromechanical actuator or an electric motor, since in both of these two solutions the actuation of the steering wheels does not generate a feedback on the steering member.

It is known, as from DE102019119463A1, using an electric motor generating a torque on a shaft that is rotated by the steering member, in order to generate such drive feedback. In particular, such an architecture makes it possible to generate a torque, for example by means of a suitably configured electronic control and command unit, which opposes the operator's action on the steering member, thus generating a haptic feedback on the steering member.

Document US2006/201733 also shows a prior art system with the features of the preamble of claim 1.

However, such systems known for generating a haptic feedback are limited in functionality, and the object of the present invention is thus to make available a more versatile system than the existing ones.

Such object is achieved by the features of the invention reported in the independent claim.

The dependent claims outline preferred and/or particularly advantageous aspects of the invention.

### DISCLOSURE OF THE INVENTION

The invention concerns a self-propelled vehicle according to claim 1. It makes available, in particular, a steering system, comprising:
- a shaft rotatable with respect to an axis of rotation,
- a steering member connected to the shaft to drive it in rotation with respect to said axis of rotation,
- an electric motor configured to generate and apply a torque on the shaft,
- a brake operable between a first position, in which it generates a braking torque on the shaft, and a second position, in which it does not generate a braking torque on the shaft, wherein the brake is of the electrically actuated type and is configured so that when it is electrically powered it is in the second position and when it is not electrically powered it is in the first position, wherein the brake comprises:
   - a first portion integral with a crankcase, to which at least one electrical winding, adapted to be crossed by an electric current to generate an electromagnetic field, is attached, said first portion also comprising a contact surface;
   - a second portion integral in rotation with the shaft and interposed between the electrical winding and the contact surface of the first portion;
   - a third portion interposed between the electrical winding and the second portion, and associated with the first portion with a single residual translational degree of freedom along the axis of rotation,
   - one elastic element configured to push the third portion against the second portion and to generate an elastic force in the direction of moving the third portion away from the electrical winding and bringing the second portion closer to the contact surface.

Thanks to this solution, the steering system is more versatile than known steering systems provided with an electric motor alone, as a haptic feedback can be generated on the steering member also by means of the brake and it is also possible to thereby achieve a redundant feedback system on the steering member that is particularly effective, compact and cheap, thanks to the presence of the motor and brake, both of which are able to generate torques on the shaft.

According to the invention, the brake is of the electrically actuated (i.e., electrically driven) type and is configured in such a way that, when it is electrically powered, it is in the second position and when it is not electrically powered it is in the first position. Thereby, in case of failure of the power supply to the steering system, it is still possible to prevent the steering member from moving on its own thanks to the brake, which is automatically activated when not powered. It is also possible to prevent the steering member from moving on its own when the vehicle on which the steering system is installed is switched off.

Regardless of the aforementioned brake conformation, the steering system may comprise an electronic control and command unit operatively connected to the brake and the electric motor and configured to generate a haptic signal on the steering member by acting on the shaft by means of the brake and/or the electric motor.

The fact that the brake is controlled by an electronic control and command unit allows to make the steering system even more versatile.

According to an aspect of the invention the steering system may comprise an angular sensor configured to measure a value of a parameter indicative of a steering angle and wherein the electronic control and command unit is operatively connected to said angular sensor and is configured to operate the brake in the first position when the value of the parameter indicative of the steering angle exceeds a predetermined threshold value.

The steering system is thereby able to provide a haptic end-of-stroke feedback to the movement of the steering member, for example, end-of-stroke of the wheel rotation, indicating to the user that it is not possible to curve the vehicle's movement trajectory more than the vehicle is already doing, i.e. that it is not possible to steer the steering wheels more than that. In particular, this effect is not achieved by the known art systems, which, in order to generate a torque such to achieve an end-of-stroke haptic feedback, would have to employ motors that are so large, and expensive, that their use is prevented. For example, a large-sized motor would not be easily fitted into the vehicle interior. A brake, on the other hand, is able to generate, in the same radial space (in the radial direction of the axis of rotation), a torque greater than an electric motor, hence, with the only action of the brake, or in addition to that of the motor, it is possible to achieve a haptic end-of-stroke feedback with a less bulky and cost-effective system.

Still regarding the generation of the motor end-of-stroke, another aspect of the invention provides that the steering system may comprise a torque sensor configured to measure a parameter indicative of the torque exerted by the steering member on the shaft and an angular sensor configured to measure a parameter indicative of the rotation angle and direction of rotation of the shaft, and wherein the electronic control and command unit is operatively connected to said sensors and is configured to maintain the brake in the first position when, once the threshold value has been exceeded, the steering member continues to generate a torque on the shaft in a direction of rotation indicative of a request to increase the steering angle.

Furthermore, the invention may provide that the electronic control unit may be configured to operate the brake in the second position when, by means of the torque sensor and the angular sensor, it detects that a command has been imparted on the steering member to decrease the steering angle.

As an alternative or in addition, the electronic control and command unit can be configured to monitor the operating state of the electric motor and to operate the brake in the first position if a malfunction of the electric motor is detected. Thereby, under conditions of electric motor malfunction, it is possible to use the brake to provide a haptic feedback to the user and to prevent the steering member from moving on its own.

According to another aspect of the invention, the steering system may comprise a hydraulic distributor and an angular sensor configured to measure a parameter indicative of the rotation of the shaft, and wherein the electronic control and command unit is configured to operate said hydraulic distributor on the basis of the measured value of the parameter indicative of the rotation of the shaft .

Thanks to this solution, the steering system is hydrostatic and allows high forces to be imparted to the steering wheels.

According to yet another aspect of the invention, the brake can exert a torque on the main shaft greater than the torque exerted by the electric motor.

The system is thereby radially compact and at the same time efficient in providing the torque surplus needed to generate the end-of-stroke haptic feedback on the steering member.

The invention makes further available a vehicle comprising a pair of steering wheels, an angular sensor configured to determine a value of a parameter indicative of a steering angle of said steering wheels, and a steering system according to claim 1, and an electronic control and command unit operatively connected to said angular sensor and configured to operate the brake on the basis of the value of the parameter indicative of the steering angle.

According to another aspect of the invention, the electronic control unit may be configured to operate the brake in the first position when the parameter indicative of the steering angle exceeds a predetermined threshold value.

### BRIEF DESCRIPTION OF THE DRAWINGS

Further features and advantages of the invention will be more apparent after reading the following description provided by way of non-limiting example, with the aid of the figures shown in the accompanying drawings.

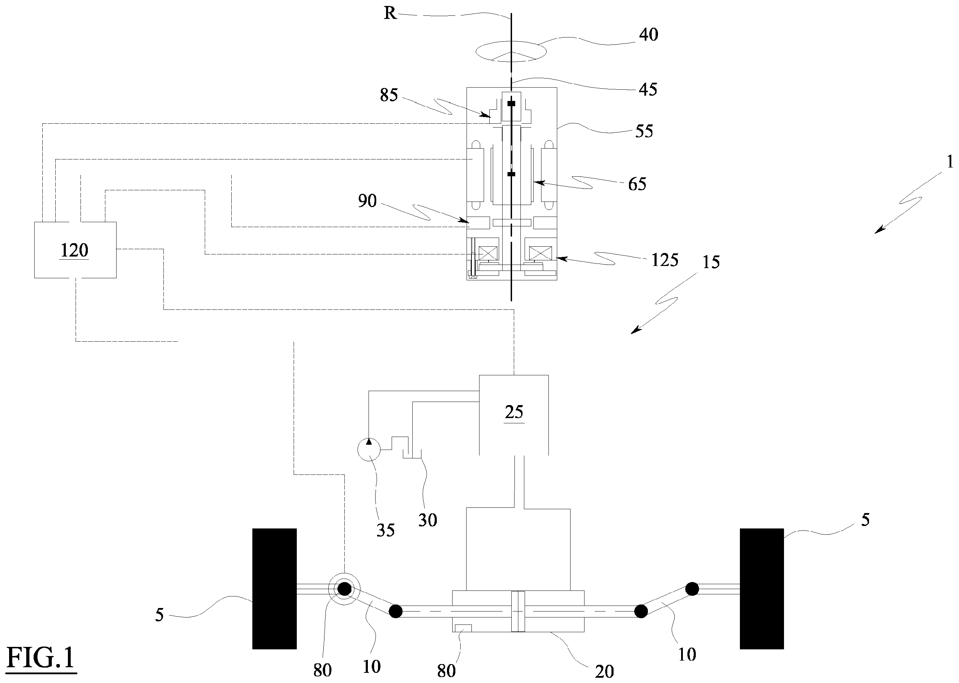

Figure 1 is a schematic view of a vehicle provided with a steering system according to the invention.

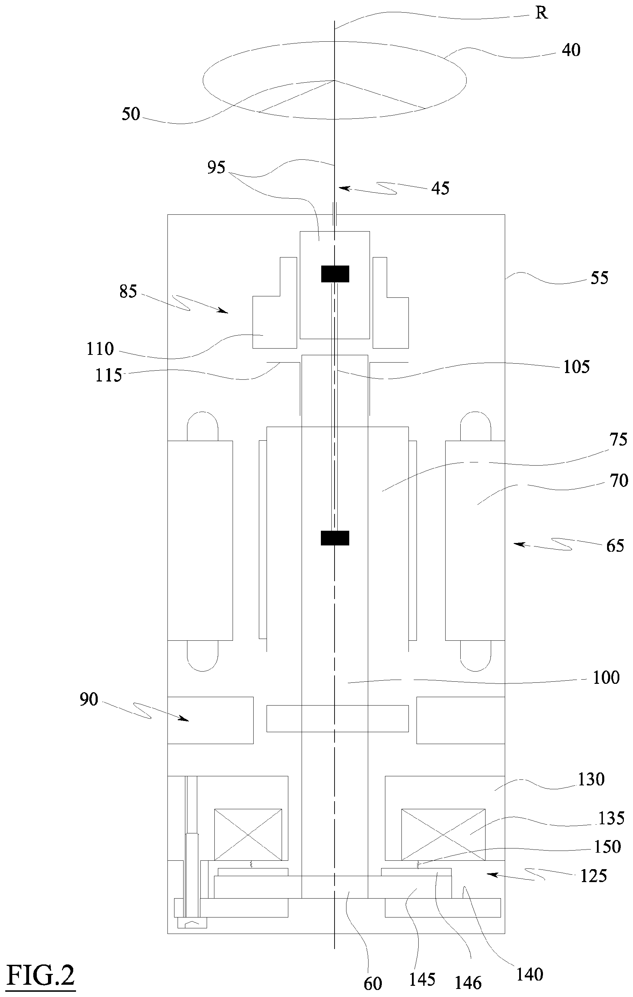

Figure 2 is an enlargement of a portion of the steering system in figure 1.

### DETAILED DESCRIPTION

With particular reference to these figures, a self-propelled vehicle provided with at least a pair of steering wheels 5, such as an agricultural vehicle or an earthmoving machine, is globally referred to as 1.

These steering wheels are hinged to a vehicle chassis (not shown) and are movable by means of a lever mechanism 10 (only a part of which is schematically shown) in order to make the vehicle steer.

The vehicle 1 includes a steering system 15 configured to operate the steering wheels to make the vehicle steer.

Such a steering system includes an actuator configured to operate the steering wheels in order to steer the vehicle.

This actuator comprises a first portion and a second portion which is movable with respect to the first portion, and which is connected, for example by means of the aforementioned levers, to one or both of the steering wheels in order to impart it the steering command. In the embodiment shown, the actuator comprises an oleo-dynamic cylinder 20, e.g. double-acting. This cylinder comprises a stem connected to a piston and to the lever 10 of at least one steering wheel of the pair of steering wheels.

The hydraulic cylinder is operated by means of a hydraulic distributor 25, such as of the linear or rotary type (with attached gerotor, i.e. volumetric doser), which is in fluid communication with a working fluid tank 30 and a pump 35 adapted to pressurise and send such working fluid to the hydraulic distributor.

The steering system 15 comprises a steering member, which is a manual steering member adapted to be grasped by a user.

In the embodiment shown, the steering member is a wheel 40, i.e. a wheel for steering. However, it is not excluded that in an alternative embodiment not shown, the steering member may be a handlebar or other manual device adapted to allow driving the rotation of a shaft.

The steering system 15 comprises a shaft 45 rotatable with respect to an axis of rotation R and to which the steering member, i.e. the wheel 40, is connected, for example directly connected and without residual degrees of freedom, so that the steering member can drive the shaft to rotate with respect to the axis of rotation R. In other words, a certain amount of rotation of the steering member corresponds to an equal rotation of the shaft. In detail, the shaft has a first axial end 50 which is directly connected and rotationally integral with the steering member, so that it can be driven in rotation by the steering member, and an opposite second axial end 60. For example, this first axial end is fitted or joined by means of a prismatic coupling to the wheel.

In the embodiment shown, the steering system 15 comprises a crankcase 55, for example box-shaped, to which the shaft 45 is rotatably associated with respect to the axis of rotation R.

In particular, the shaft 45 is partially contained in the crankcase 55 so that the first axial end 50 protrudes externally from the crankcase 55. The second axial end 60, opposite to the first one and which is contained (entirely) in the crankcase 55.

In detail, the crankcase 55 comprises an opening from which the shaft 45 projects, and at which at least one bearing is housed to allow the rotation of the shaft with respect to the axis of rotation R.

Starting from a neutral position of the shaft 45, and therefore of the steering member, corresponding to a non-steering condition of the steering wheels, the steering shaft can be rotated in both directions of rotation with respect to this neutral position in order to impart a steering command to the right or to the left of the vehicle on which the steering system is installed.

The steering system 15 comprises an electric motor 65 configured to generate and apply a torque on the shaft, i.e., a torque configured to rotate the shaft with respect to the axis of rotation R.

In particular, the electric motor 65 comprises a stator 70, for example fixed without residual degrees of freedom to the crankcase 55, and a rotor 75 rotationally integral (without residual degrees of freedom) to the shaft 45.

At least one between the stator and the rotor comprises a plurality of windings adapted to be crossed by an electric current to generate an electromagnetic field.

The electric motor is for instance configured to generate a variable torque having a maximum achievable value of less than 10 Nm. Preferably, in the embodiment shown, the maximum torque value that can be delivered is less than or equal to 4 Nm. This makes it possible to obtain an electric motor capable of generating a torque perceivable to the user, and at the same time particularly compact, in particular in the radial direction.

It should be specified that in this disclosure the term torque is used to refer to a twisting torque, not a bending torque.

The steering system may comprise an angular sensor 80 configured to measure a value of a parameter indicative of a steering angle, i.e. a steering angle of the tract on which the steering system is installed.

Steering angle means the actual (not hypothetical) angle by which the wheels are rotated with respect to a substantially vertical axis of rotation in order to steer the vehicle with respect to a neutral condition in which the vehicle moves along a rectilinear trajectory. In the neutral condition, the steering angle is therefore substantially 0°.

When the steering member is in the neutral position, the steering wheels are also in the neutral condition.

The angular sensor 80 may, for example, be one of: a sensor measuring the position of the second actuator element with respect to the first one, i.e., measuring the position of the stem with respect to the cylinder, and a rotary sensor measuring the rotation of a pin by which a steering wheel is hinged to the chassis in order to perform steering operations, and a rotary sensor measuring the rotation of a lever element connecting the actuator to the steering wheel. (such sensors may for example be potentiometric, or optical or hall-effect or inductive sensors).

As an alternative or in addition to the angular sensor 80 configured to measure the value of the parameter indicative of the steering angle, the steering system may comprise an angular sensor configured to detect a value of a parameter indicative of the rotation angle of the shaft 45 with respect to the axis of rotation R, for example also with respect to the crankcase 55 where the shaft is contained.

Said sensor obtains such parameter by taking a measurement directly on shaft 45. In other words, this sensor has a monitoring area within which the shaft 45 falls.

In the embodiment shown, there are two sensors capable of detecting such parameter in order to carry out a redundant measurement.

For example, the system comprises a resolver 90, i.e. an angular sensor which is also used to control the power supply to the electric motor, and another angular sensor, such as a relative sensor.

The resolver comprises a fixed portion, integral with the crankcase 55, and a mobile portion integral with the shaft 45 in rotation.

In addition or as an alternative to the sensors described hitherto, the steering system may also comprise a torque sensor, configured to measure a parameter indicative of a torque transmitted between the steering member, i.e. the wheel, and the shaft 45.

In the embodiment shown, the relative angular sensor and the torque sensor are made by means of a single measuring tool 85.

In particular, in this embodiment, the shaft 45 comprises two sections, a first section 95 proximal to the steering member and connected thereto, i.e. provided with the first axial end 50, and a second section 100 connected to the first section 95 by directly interposing a torsion bar 105 forming part of said measuring tool.

The torsion bar 105 thus comprises a first axial end joined (integral) in rotation to the first section with respect to the axis of rotation R and a second axial end joined (integral) in rotation to the second section with respect to the axis of rotation R.

The measuring tool comprises an angular sensor configured to measure a value of the angular displacement (with respect to the axis of rotation R) between the first section 95 and the second section 100.

In particular, the measuring tool comprises a first element 110 integral with the first section 95 and a second element 115 integral with the second section 100, and is configured to measure the value of angular displacement between the first and second element.

The measuring device determines the torque acting between the steering member and the shaft 45, i.e. between the first section 95 and the second section 100 of the shaft 45, and the rotation angle of the shaft 45 with respect to the axis of rotation R, i.e. of the first section 95 of the shaft with respect to the axis of rotation R, as well as the direction of such rotation, based at least on the angular displacement measured by the angular sensor and a constant of the torsion bar indicating the torsion torque to be applied to the torsion bar to obtain a predetermined elastic torsional deformation of the bar.

The electric motor 65 acts directly, i.e. the rotor of this motor is fixed, on the second section 100 of the shaft 45.

The second section 100 comprises the second axial end 60 of the shaft 45.

The second section 100 is entirely contained in the crankcase 55.

The steering system may comprise an electronic control and command unit 120 operatively connected to the electric motor 65 to drive it in order to generate a haptic feedback on the steering member. Such haptic feedback consists of a torque generated and applied on the shaft 45.

For example, the electronic control and command unit 120 may be configured to drive the electric motor 65 in order to generate and apply a torque on the shaft 45 in a direction of rotation opposite to a direction of rotation imparted to the shaft by the steering member.

In order to carry out this operation, the electronic control and command unit is operatively connected to the angular sensor configured to detect the parameter indicative of the rotation angle of the shaft 45 with respect to the axis of rotation R and/or to the torque sensor and is configured to calculate a direction of rotation of the shaft by means of this parameter and to drive the electric motor so as to generate and apply on the shaft a torque in the opposite direction to the calculated one.

The electronic control and command unit can also be configured to perform an operation of re-centring the shaft 45 and thus the steering member.

When the operator does not act on the steering member and the latter is not in the neutral position, the electronic control and command unit is configured to drive the motor in order to generate and apply a torque on the shaft to make the shaft rotate towards the neutral position and to stop applying the torque when such position is reached.

In order to determine when the operator does not act on the steering member, the electronic control and command unit 120 is configured to monitor the value of the parameter measured by the torque sensor, i.e. the measuring device.

In order to determine when the steering member is not in neutral position, the electronic control and command unit is configured to monitor the value of the parameter indicative of the steering angle.

If the value of the parameter measured by the torque sensor falls below a pre-determined threshold value and at the same time the value of the parameter indicative of the steering angle is greater than a pre-determined threshold value, e.g. it is greater than zero, the electronic control and command unit is configured to perform the aforementioned re-centring operation.

During the re-centring operation, the electronic control and command unit is also configured to monitor the value of the parameter indicative of the rotation of the shaft 45 in order to calculate the rotation speed of this shaft and to modulate the torque generated by the motor also based on this calculated speed.

The electronic control and command unit is configured to generate a steering signal based on (at least based on) the value of the parameter indicative of the rotation of the shaft 45 with respect to the axis of rotation R measured by means of the angular sensor measuring the rotation of the shaft 45. Therefore, for instance, by means of the resolver and/or measuring device 85.

In the embodiment shown, the electronic control and command unit is also configured to drive the hydraulic distributor in order to give a steering command, based on the value of the parameter indicative of the rotation angle of the shaft.

The hydraulic distributor is connected to the shaft 45, and therefore to the steering member, only by means of the electronic control and command unit 120. These elements are therefore neither hydraulically nor mechanically connected.

In particular, the hydraulic distributor comprises an electric drive that is controlled by the electronic control and command unit. In the case of the linear distributor, the electric drive may comprise, for example, a solenoid, and in the case of the rotary distributor, the electric drive may comprise, for example, an electric motor.

As the steering of the wheels is imparted by the angular sensor measuring the rotation of the shaft 45, in case of a steering system not shown with open chain control, i.e. not provided with the sensor that measures the steering angle of the wheels, the parameter indicative of the steering angle can be obtained by means of the angular sensor that measures the rotation of the shaft 45, thus assuming that steering wheels always steer following exactly the imparted command.

The steering system comprises a brake 125 connected to the shaft and operable between a first position, in which it generates a braking torque on the shaft, and a second position, in which it does not generate any braking torque on the shaft, i.e. in which it does not interfere with the rotation of the shaft with respect to the axis of rotation R.

In the embodiment shown, the brake 125 is configured to act on the second section 100 of the shaft 45 (therefore downstream of the torque sensor, i.e. of the torsion bar, with respect to the steering member). In detail, it acts near the second axial end 60 of the shaft 45 and the electric motor is placed axially between the brake and the first axial end of the shaft (within the second section).

For example, the brake is configured to generate a braking torque between 4 Nm and 10 Nm, preferably between 5 Nm and 6 Nm.

In the embodiment shown, the brake 125 is configured to exert a minimum braking torque which is greater than the maximum torque that can be generated by the motor

Still in the embodiment shown, the brake can be applied in only two of said positions, i.e. it cannot be modulated. In addition, the braking torque exerted in the first position is fixed and predetermined.

The brake 125 is for instance of the electrically actuated type.

In detail, it is configured so that when it is electrically powered it is in the second position and when it is not electrically powered it is in the first position. The brake then automatically switches from the second position to the first position when it is not electrically powered, e.g. in case of failure of the power supply.

Thereby, if there is no power supply in the entire steering system or in a portion thereof comprising the electric motor and the brake, a condition in which the electric motor cannot generate a torque on the shaft 45, the brake automatically generates a braking torque on the shaft and thus a haptic feedback perceivable by the operator. Furthermore, in such a failure condition, the brake is able to prevent the steering member from freely moving even in the absence of forces applied thereon by the operator.

It should be noted that switching to this failure/emergency condition occurs automatically without any need for signals from the electronic control unit or monitoring by any steering system sensors.

Automatic switching from the second position to the first position when the brake is not electrically powered occurs, for example, by the force generated by a spring element.

For example, the brake 125 may comprise a first portion 130, for example integral with the crankcase 55, to which at least one electrical winding 135, adapted to be crossed by an electric current to generate an electromagnetic field, is attached. Such first portion also comprises a contact surface 140, e.g. flat and discoidal.

The brake 125 then comprises a second portion 145, for example of a discoidal shape, integral in rotation with the shaft 45.

The second portion 145 is interposed between the electrical winding and the contact surface 140 of the first portion 130.

The second portion 145 may be a lining, i.e. a body with a high coefficient of friction. For example, the second portion may comprise or be a mixture of the following materials: aramid, resin, ceramic, aluminium oxide, graphite and carbon.

The brake then comprises a third portion 146 which is interposed between the electrical winding 135 and the second portion, and associated with the first portion with a single residual translational degree of freedom along the axis of rotation R.

The third portion 146 is pushed against the second portion by means of at least one elastic (i.e., resilient) element 150 that generates an elastic force in the direction of moving the third portion away from the electrical winding and bringing the second portion closer to the contact surface 140, so as to clamp the second portion in a vice-like manner between the third portion and the contact surface in order to exert the braking torque on the shaft 45. Then the spring element, which is interposed between the winding and the third portion is configured and positioned to generate a force implementing the first position of the brake.

When the electrical winding 135 is electrically powered, it generates an electromagnetic force that attracts the third portion 146 towards itself by overcoming the force exerted on the third portion by the elastic element 150, since the third portion is at least partially made of a ferromagnetic metal that is therefore attracted by the electromagnetic force generated by the winding.

It is not excluded that in an embodiment not shown, the third portion may not be present, and the second portion is made of ferromagnetic material and the elastic element insists directly on the second portion, which in such an architecture should therefore be rotationally integral with the shaft but also sliding with respect thereto in the direction of the axis of rotation R in order to be able to be pressed by the elastic element against the contact surface 140.

The brake 125 can be operatively connected to the electronic control and command unit, as in the embodiment shown, which can then be configured to generate a haptic signal on the steering member by means of the brake.

In this case, it is not strictly necessary for the brake to be able to switch from the second position to the first position in the event of a power supply failure, so the fact that the brake can be controlled by the electronic control and command unit to generate a haptic feedback on the shaft is a protectable aspect regardless of whether the brake can switch from the second position to the first position in the event of a power failure to generate the braking torque on the shaft 45 in the event of a lack of power supply.

The brake could therefore also be configured to be in the second position when it is not electrically powered, i.e. the electrical winding is not electrically powered, and to be in the first position when it is electrically powered.

Obviously in this case the brake would not be able to generate a braking torque on the brake in the event of a power failure.

In the embodiment shown, preferably the brake is of the type whereby when it is electrically powered it is in the second position and when it is not electrically powered it is in the first position, and is also connected to the electronic control and command unit to generate a haptic feedback on the shaft 45, for example by summing with a haptic signal generated by means of the electric motor 65 or in place of the electric motor (when the electric motor is electrically powered or otherwise powerable). The brake cannot exert a re-centring effect, but it can generate the torque that opposes to the movement of the shaft by means of the steering member.

Regardless of the brake design, the electronic control and command unit can be configured to monitor the value of the parameter indicative of the steering angle and to apply the brake in the first position when this monitored value exceeds a predetermined threshold value.

It is thereby possible to generate a feedback to indicate to the operator that an end-of-stroke steering angle has been reached, beyond which the steering angle cannot be increased. The feedback is particularly effective and clear thanks to the torque exerted on the shaft by the brake which is greater than that generated by the motor.

Such braking torque may also be added to the torque exerted by the electric motor 65, in such a case, for instance, the electronic control and command unit may be configured to monitor the value of the parameter indicative of the steering angle and the value of the parameter indicative of the rotation angle of the shaft 45, the latter in order to determine, for example also by monitoring the torque sensor, the direction of rotation of the shaft 45, and may be configured to operate the brake 125 in the first position and to operate the electric motor 65 so that it generates and applies a torque on the shaft in the direction of rotation opposite to the measured direction of rotation, when such monitored value exceeds a predetermined threshold value.

To improve such end-of-stroke feedback, the electronic control and command unit 120 may be configured to monitor the value of the parameter indicative of the torque exerted on the shaft 45 by the steering member and the value of the parameter indicative of the rotation angle of the shaft 45, and to hold the brake in the first position when, once the threshold value has been exceeded, the steering member (indeed under the action of an operator) continues to generate a torque on the shaft 45 in a direction of rotation indicative of a request to increase the steering angle, thus leading to an increase with respect to the threshold value of the steering angle.

As an alternative or in addition to monitoring the value of the parameter indicative of the rotation angle of the shaft 45, the value of the parameter indicative of the steering angle may also be used in order to determine the direction of rotation of the shaft 45.

Furthermore, the electronic control and command unit can be configured, once the threshold value has been exceeded and the motor has been operated in the first position, to operate the brake 125 in the second position when the torque sensor and/or the sensor measuring the rotation angle of the shaft 45 detects that a command has been imparted on the steering member to decrease the steering angle. That is, when it detects that the direction of rotation of the shaft is opposite to that enabling to increase the steering angle of the steering wheels.

In particular, it can be provided that the electronic control and command unit can be configured, once the threshold value has been exceeded and the motor has been operated in the first position, to operate the brake 125 in the second position when, by means of the torque sensor and/or of the sensor measuring the rotation angle of the shaft 45, it detects a command been imparted on the steering member to decrease the steering angle and when, by means of the sensor monitoring the steering angle, it detects that the value of the measured parameter indicative of the steering angle is lower than the predetermined threshold value.

As an alternative or in addition to the functions that the electronic control and command unit can perform by means of the brake, the electronic control and command unit can be configured to monitor the operating state of the electric motor and to operate the brake in the first position if it detects a malfunction of the electric motor. Thereby, under conditions of electric motor malfunction, it is possible to use the brake to provide a haptic feedback to the user and to prevent the steering member from moving on its own.

In addition, it is not excluded that in alternative embodiments not shown, the electronic control and command unit can be configured to generate other haptic feedbacks by means of the brake, such as momentary braking torques even when below the end-of-stroke steering angle to warn the user about predetermined conditions, such as failure of some components or dangerous driving.

The crankcase 55 contains therein at least the electric motor and the brake.

In the embodiment shown, it also comprises the measuring device.

The sensor configured to measure the steering angle is obviously external to the crankcase 55.

The operation of the steering system according to the invention is the following.

When the operator generates a force on the steering member to perform a steering manoeuvre of the vehicle, the shaft 45 is rotated accordingly and the electronic control and command unit, by monitoring the value of the parameter indicative of the rotation angle of the shaft 45, imparts a command to the hydrostatic distributor to operate the actuator and consequently act on the steering wheels.

If a value of the steering angle equal to the threshold value indicative of the end-of-stroke is reached, the electrical control and command unit operates the brake so that it exerts the braking torque on the shaft.

In addition, if a failure of the power supply to the electric motor 65 or a malfunction should occur while the vehicle is in use, the electronic control and command unit switches the brake to the first position by removing the power supply. In case of a power failure in the brake, which could also affect the electric motor 65, the brake automatically moves to the first position.

It should be noted that in this disclosure, "rotationally integral" means directly driven in rotation by the element to which it is rotationally integral.

The invention thus conceived is susceptible to several modifications and variations, all falling within the scope of the inventive concept.

Moreover, all the details can be replaced by other technically equivalent elements.

In practice, the materials used, as well as the contingent shapes and sizes, can be whatever according to the requirements without for this reason departing from the scope of protection of the following claims.

## Claims

1. Self-propelled vehicle (1), said vehicle being one between an agricultural vehicle or an earthmoving machine and comprising a steering system (15), said steering system comprising:
- a shaft (45) rotatable with respect to an axis of rotation (R),
- a steering member (40) connected to the shaft to drive it in rotation with respect to said axis of rotation (R),
- an electric motor (65) configured to generate and apply a torque on the shaft (45), and
- a brake (125) operable between a first position, in which it generates a braking torque on the shaft (45), and a second position, in which it does not generate a braking torque on the shaft (45)
wherein the brake (125) is of the electrically actuated type and is configured so that when it is electrically powered it is in the second position and when it is not electrically powered it is in the first position, **characterised in that**
the brake (125) comprises:
- a first portion (130) integral with a crankcase (55), to which at least one electrical winding (135), adapted to be crossed by an electric current to generate an electromagnetic field, is attached, said first portion also comprising a contact surface (140);
- a second portion (145) integral in rotation with the shaft and interposed between the electrical winding (135) and the contact surface of the first portion;
- a third portion (146) interposed between the electrical winding and the second portion, and associated with the first portion with a single residual translational degree of freedom along the axis of rotation (R),
- one elastic element (150) configured to push the third portion against the second portion and to generate an elastic force in the direction of moving the third portion away from the electrical winding and bringing the second portion closer to the contact surface.

2. Self-propelled vehicle (1) according to claim 1, comprising an electronic control and command unit (120) operatively connected to the electric motor and to the brake and configured to generate a haptic signal on the steering member (40), by acting on the shaft (45) by means of the brake (125) or the brake (125) and the electric motor (65).

3. Self-propelled vehicle (1) according to claim 2, comprising an angular sensor (80,85,90) configured to measure a value of a parameter indicative of a steering angle and wherein the electronic control and command unit (120) is operatively connected to said angular sensor (80,85,90) and is configured to operate the brake in the first position when the value of the parameter indicative of the steering angle exceeds a predetermined threshold value.

4. Self-propelled vehicle (1) according to claim 3, comprising a torque sensor (85) configured to measure a value of a parameter indicative of the torque exerted by the steering member (40) on the shaft (45) and an angular sensor (85,90) configured to measure a value of a parameter indicative of the rotation angle and direction of rotation of the shaft with respect to the axis of rotation (R), and wherein the electronic control and command unit (120) is operatively connected to said sensors (85,90) and is configured to keep the brake (125) in the first position when, once the threshold value has been exceeded, the steering member (40) continues to generate a torque on the shaft in a direction of rotation indicative of a request to increase the steering angle.

5. Self-propelled vehicle (1)according to claim 3 or 4, wherein the electronic control and command unit (120) is configured to operate the brake (125) in the second position when by means of the torque sensor (85) and the angular sensor (85,90) it detects that a command has been imparted on the steering member to decrease the steering angle.

6. Self-propelled vehicle (1)according to claim 1, comprising a hydraulic distributor (25) and an angular sensor (85,90) configured to measure a parameter indicative of the rotation of the shaft (45) with respect to the axis of rotation (R), and wherein the electronic control and command unit (120) is configured to operate said hydraulic distributor on the basis of the measured value of the parameter indicative of the rotation of the shaft (45) with respect to the axis of rotation (R).

7. Self-propelled vehicle (1) according to claim 1, wherein the electronic control and command unit (120) can be configured to monitor the operating state of the electric motor (65) and to operate the brake (125) in the first position in case it should identify a malfunction of the electric motor (65).

8. Self-propelled vehicle (1) according to claim 1, wherein the brake (125) exerts a torque on the shaft (54) greater than the torque exerted by the electric motor (65).

9. Self-propelled vehicle (1) according to claim 1, comprising a pair of steering wheels (5), an angular sensor (80) configured to determine a value of a parameter indicative of a steering angle of said steering wheels, and an electronic control and command unit (120) operatively connected to said angular sensor (80) and configured to operate the brake (125) on the basis of the value of the parameter indicative of the steering angle.

10. Self-propelled vehicle (1) according to claim 1, wherein the brake is configured to generate a braking torque between 4 Nm and 10 Nm.

## Patentansprüche

1. Selbstfahrendes Fahrzeug (1), wobei das Fahrzeug eines von einem landwirtschaftlichen Fahrzeug oder einer Erdbewegungsmaschine ist und umfassend ein Lenksystem (15), das Lenksystem umfassend:
- eine Welle (45), die in Bezug auf eine Drehachse (R) drehbar ist,
- ein Lenkorgan (40), das mit der Welle verbunden ist, um diese in Bezug auf die Drehachse (R) in Drehung zu versetzen,
- einen Elektromotor (65), der konfiguriert ist, um ein Drehmoment an der Welle (45) zu erzeugen und anzulegen, und
- eine Bremse (125), die zwischen einer ersten Position, in der sie ein Bremsmoment an der Welle (45) erzeugt, und einer zweiten Position, an der sie kein Bremsmoment an der Welle (45) erzeugt, betätigbar ist,
wobei die Bremse (125) von dem elektrisch betätigten Typ ist und konfiguriert ist, sodass wenn sie mit Strom versorgt wird, in der zweiten Position ist, und in der ersten Position ist, wenn sie nicht mit Strom versorgt wird, **dadurch gekennzeichnet, dass** die Bremse (125) Folgendes umfasst:
- einen ersten Abschnitt (130), der fest mit einem Kurbelgehäuse (55) verbunden ist, an dem mindestens eine elektrische Wicklung (135), die angepasst ist, um von einem elektrischen Strom durchflossen zu werden, um ein elektromagnetisches Feld zu erzeugen, angebracht wobei der erste Abschnitt auch eine Kontaktfläche (140) umfasst;
- einen zweiten Abschnitt (145), der drehfest mit der Welle verbunden ist und zwischen die elektrische Wicklung (135) und die Kontaktfläche des ersten Abschnitts eingefügt ist;
- einen dritten Abschnitt (146), der zwischen die elektrische Wicklung und den zweiten Abschnitt eingefügt und mit einem einzigen verbleibenden translatorischen Freiheitsgrad entlang der Drehachse (R) mit dem ersten Abschnitt verbunden ist,
- ein elastisches Element (150), das konfiguriert ist, um den dritten Abschnitt gegen den zweiten Abschnitt zu drücken und eine elastische Kraft in der Richtung zu erzeugen, die den dritten Abschnitt von der elektrischen Wicklung wegbewegt und den zweiten Abschnitt näher an die Kontaktfläche bringt.

2. Selbstfahrendes Fahrzeug (1) nach Anspruch 1, umfassend eine elektronische Steuer- und Befehlseinheit (120), die funktionsfähig mit dem Elektromotor und der Bremse verbunden und konfiguriert ist, um durch Einwirken auf die Welle (45) mittels der Bremse (125) oder der Bremse (125) und des Elektromotors (65) ein haptisches Signal an dem Lenkorgan (40) zu erzeugen.

3. Selbstfahrendes Fahrzeug (1) nach Anspruch 2, umfassend einen Winkelsensor (80, 85, 90), der konfiguriert ist, um einen Wert eines Parameters zu messen, der indikativ für einen Lenkwinkel ist, und wobei die elektronische Steuer- und Befehlseinheit (120) funktionsfähig mit dem Winkelsensor (80, 85, 90) verbunden und konfiguriert ist, um die Bremse in der ersten Position zu betätigen, wenn der Wert des Parameters, der indikativ für den Lenkwinkel ist, einen vorbestimmten Schwellenwert überschreitet.

4. Selbstfahrendes Fahrzeug (1) nach Anspruch 3, umfassend einen Drehmomentsensor (85), der konfiguriert ist, um einen Wert eines Parameters zu messen, der indikativ für das von dem Lenkorgan (40) auf die Welle (45) ausgeübte Drehmoment ist, und einen Winkelsensor (85, 90), der konfiguriert ist, um einen Wert eines Parameters zu messen, der indikativ für den Drehwinkel und die Drehrichtung der Welle in Bezug auf die Drehachse (R) ist, und wobei die elektronische Steuer- und Befehlseinheit (120) funktionsfähig mit den Sensoren (85, 90) verbunden und konfiguriert ist, um die Bremse (125) in der ersten Position zu halten, wenn das Lenkorgan (40) nach Überschreiten des Schwellenwerts weiterhin ein Drehmoment an der Welle in einer Drehrichtung zu erzeugen, die indikativ für eine Anforderung zum Vergrößern des Lenkwinkels ist.

5. Selbstfahrendes Fahrzeug (1) nach Anspruch 3 oder 4, wobei die elektronische Steuer- und Befehlseinheit (120) konfiguriert ist, um die Bremse (125) in der zweiten Position zu betätigen, wenn sie mittels des Drehmomentsensors (85) und des Winkelsensors (85, 90) erfasst, dass ein Befehl zum Verringern des Lenkwinkels an das Lenkorgan gegeben wurde.

6. Selbstfahrendes Fahrzeug (1) nach Anspruch 1, umfassend einen hydraulischen Verteiler (25) und einen Winkelsensor (85, 90), der konfiguriert ist, um einen Parameter zu messen, der indikativ für die Drehung der Welle (45) in Bezug auf die Drehachse (R) ist, und wobei die elektronische Steuer- und Befehlseinheit (120) konfiguriert ist, um den hydraulischen Verteiler basierend auf dem gemessenen Werts des Parameters zu betätigen, der indikativ für die Drehung der Welle (45) in Bezug auf die Drehachse (R) ist.

7. Selbstfahrendes Fahrzeug (1) nach Anspruch 1, wobei die elektronische Steuer- und Befehlseinheit (120) konfiguriert werden kann, um den Betriebszustand des Elektromotors (65) zu überwachen und die Bremse (125) in einem Fall in der ersten Position zu betätigen, wenn eine Störung des Elektromotors (65) erkannt wird.

8. Selbstfahrendes Fahrzeug (1) nach Anspruch 1, wobei die Bremse (125) ein Drehmoment auf die Welle (54) ausübt, das größer ist als das vom Elektromotor (65) ausgeübte Drehmoment.

9. Selbstfahrendes Fahrzeug (1) nach Anspruch 1, umfassend ein Paar Lenkräder (5), einen Winkelsensor (80), der konfiguriert ist, um einen Wert eines Parameters zu bestimmen, der indikativ für einen Lenkwinkel der Lenkräder ist, und eine elektronischen Steuer- und Befehlseinheit (120), die funktionsfähig mit dem Winkelsensor (80) verbunden und konfiguriert ist, um die Bremse (125) basierend auf dem Wert des Parameters zu betätigen, der indikativ für den Lenkwinkel ist.

10. Selbstfahrendes Fahrzeug (1) nach Anspruch 1, wobei die Bremse konfiguriert ist, um ein Bremsmoment zwischen 4 Nm und 10 Nm zu erzeugen.

## Revendications

1. Véhicule automoteur (1), ledit véhicule étant à mi-chemin entre un véhicule agricole et une machine de terrassement et comprenant un système de direction (15), ledit système de direction comprenant :
- un arbre (45) pouvant tourner autour d'un axe de rotation (R),
- un organe de direction (40) connecté à l'arbre afin de l'entraîner en rotation autour dudit axe de rotation (R),
- un moteur électrique (65) configuré pour générer et appliquer un couple sur l'arbre (45), et
- un frein (125) pouvant fonctionner entre une première position, dans lequel il génère un couple de freinage sur l'arbre (45), et une deuxième position, dans laquelle il ne génère pas de couple de freinage sur l'arbre (45), dans lequel le frein (125) étant du type à commande électrique et étant configuré de telle sorte que, lorsqu'il est alimenté de manière électrique, il se trouve dans la deuxième position et, lorsqu'il n'est pas alimenté de manière électrique, il se trouve dans la première position, **caractérisé en ce que** le frein (125) comprend :
- une première partie (130) faisant corps avec un carter (55), à laquelle est fixé au moins un enroulement électrique (135) adapté pour être parcouru par un courant électrique afin de générer un champ électromagnétique, ladite première partie comprenant également une surface de contact (140) ;
- une deuxième partie (145) faisant corps en rotation avec l'arbre et interposée entre l'enroulement électrique (135) et la surface de contact de la première partie ;
- une troisième partie (146) intercalée entre l'enroulement électrique et la deuxième partie, et associée à la première partie avec un seul degré de liberté de translation résiduel le long de l'axe de rotation (R),
- un élément élastique (150) configuré pour pousser la troisième partie contre la deuxième partie et pour générer une force élastique dans le sens éloignant la troisième partie de l'enroulement électrique et rapprochant la deuxième partie de la surface de contact.

2. Véhicule automoteur (1) selon la revendication 1, comprenant une unité de commande et de contrôle électronique (120) connectée de manière opérationnelle au moteur électrique et au frein et configurée de manière à générer un signal tactile sur l'élément de direction (40), en agissant sur l'arbre (45) au moyen du frein (125) ou du frein (125) et du moteur électrique (65).

3. Véhicule automoteur (1) selon la revendication 2, comprenant un capteur angulaire (80, 85, 90) configuré pour mesurer une valeur d'un paramètre indicatif d'un angle de direction, et dans lequel l'unité de commande et de contrôle électronique (120) est connectée de manière opérationnelle audit capteur angulaire (80, 85, 90) et est configurée pour actionner le frein dans la première position lorsque la valeur du paramètre indicatif de l'angle de direction dépasse une valeur seuil prédéterminée.

4. Véhicule automoteur (1) selon la revendication 3, comprenant un capteur de couple (85) configuré pour mesurer une valeur d'un paramètre indicatif du couple exercé par l'élément de direction (40) sur l'arbre (45) et un capteur angulaire (85, 90) configuré pour mesurer une valeur d'un paramètre indicatif de l'angle de rotation et du sens de rotation de l'arbre par rapport à l'axe de rotation (R), et dans lequel l'unité de commande et de contrôle électronique (120) est connectée de manière opérationnelle auxdits capteurs (85, 90) et est configurée pour maintenir le frein (125) en première position lorsque, une fois la valeur seuil dépassée, l'élément de direction (40) continue à générer un couple sur l'arbre dans une direction de rotation indicative d'une demande d'augmentation de l'angle de braquage.

5. Véhicule automoteur (1) selon la revendication 3 ou 4, dans lequel l'unité de commande et de contrôle électronique (120) est configurée pour actionner le frein (125) dans la deuxième position lorsqu'elle détecte, au moyen du capteur de couple (85) et du capteur angulaire (85, 90), qu'une commande a été transmise à l'élément de direction pour réduire l'angle de braquage.

6. Véhicule automoteur (1) selon la revendication 1, comprenant un distributeur hydraulique (25) et un capteur angulaire (85, 90) configuré pour mesurer un paramètre indicatif de la rotation de l'arbre (45) par rapport à l'axe de rotation (R), et dans lequel l'unité de commande et de contrôle électronique (120) est configurée pour actionner ledit distributeur hydraulique sur la base de la valeur mesurée du paramètre indicatif de la rotation de l'arbre (45) par rapport à l'axe de rotation (R).

7. Véhicule automoteur (1) selon la revendication 1, dans lequel l'unité de commande et de contrôle électronique (120) peut être configurée pour surveiller l'état de fonctionnement du moteur électrique (65) et pour actionner le frein (125) en première position au cas où elle détecterait un dysfonctionnement du moteur électrique (65).

8. Véhicule automoteur (1) selon la revendication 1, dans lequel le frein (125) exerce un couple sur l'arbre (54) supérieur au couple exercé par le moteur électrique (65).

9. Véhicule automoteur (1) selon la revendication 1, comprenant une paire de roues de direction (5), un capteur angulaire (80) configuré pour déterminer une valeur d'un paramètre indicatif d'un angle de direction desdites roues de direction, et une unité de commande et de contrôle électronique (120) connectée de manière opérationnelle audit capteur angulaire (80) et configurée pour actionner le frein (125) sur la base de la valeur du paramètre indicatif de l'angle de direction.

10. Véhicule automoteur (1) selon la revendication 1, dans lequel le frein est configuré pour générer un couple de freinage compris entre 4 Nm et 10 Nm.
